Europäisches Patentamt

**European Patent Office**

Office européen des brevets

(11) Publication number: **0 305 146 B1**

(12) **EUROPEAN PATENT SPECIFICATION**

(45) Date of publication of patent specification: **14.10.92**

(21) Application number: **88307795.0**

(22) Date of filing: **23.08.88**

(51) Int. Cl.⁵: **C08L 29/04**, C08L 23/08, B32B 27/28, //(C08L29/04, 77:00),(C08L23/08,77:00)

(54) **Blends of ethylene vinyl alcohol copolymer and amorphous polyamide and multilayer containers made therefrom.**

(30) Priority: **24.08.87 US 88261**

(43) Date of publication of application:
**01.03.89 Bulletin 89/09**

(45) Publication of the grant of the patent:
**14.10.92 Bulletin 92/42**

(84) Designated Contracting States:
**BE CH DE FR GB IT LI NL SE**

(56) References cited:
**EP-A- 0 044 484**
**US-A- 4 615 926**

(73) Proprietor: **E.I. DU PONT DE NEMOURS AND COMPANY**
**1007 Market Street**
**Wilmington Delaware 19898(US)**

(72) Inventor: **Deak, Gedeon Imre**
**14 Ravine Road**
**Wilmington Delaware 19810(US)**

(74) Representative: **Jones, Alan John et al**
**CARPMAELS & RANSFORD 43 Bloomsbury Square**
**London, WC1A 2RA(GB)**

**Description**

This invention relates to blends of ethylene vinyl alcohol copolymer with a minor amount of amorphous polyamide and their use as a barrier layer in thermoformed multilayer containers.

Blends of ethylene vinyl alcohol polymers with polyamides in general are known, and have been used in packaging applications as barriers to inhibit the passage of atmospheric oxygen or other gases.

U. S. 3,726,034, Bottenbruch et al., discloses mixtures of 70-99% polyamide and up to 30% of a hydroxyl containing polyolefin. The polyamides "consist of linear unbranched polymer chains containing no additional functional groups." Exemplified are blends of nylon 6 and EVOH.

U. S. 4,079,850, Suzuki et al., discloses a multilayer blow molded container, which contains a layer which may be EVOH, polyamide, or various blends, providing gas barrier properties. The polyamides which are mentioned are nylon 6, nylon 66, and nylon 12.

U. S. 4,427,825, Degrassi et al., discloses a composition of matter useful for making films, of polyamide and 1-65% EVOH. Nylons with melting points greater than 175° C are preferred, such as nylon 11 or nylon 12.

U. S. 4,500,677, Maruhashi et al., discloses a resin composition comprising a mixture of two EVOH resins and a polyamide resin. The ratio of the EVOH resins to the nylon resin can be between 95:5 and 5:95. Nylon 6, nylon 6,6 and other polyamides having "linear alkylene group[s]" are specifically mentioned.

Ethylene vinyl alcohol copolymer (EVOH) is commonly used in the form of a thin layer together with thicker layers of less expensive structural materials, for example, polypropylene or polyethylene terephthalate, in order to form a structure which is resistant to the passage of atmospheric oxygen or other gasses. In order to make containers or oriented films of such multi-layer structures a solid phase thermoforming process is often used. However, EVOH cannot be formed at the relatively lower temperatures required for the thermoforming of many common structural materials without rupturing the EVOH layer, resulting in a loss of overall barrier performance. An object of this invention is to provide a modified EVOH composition which may be used in thermoformed multilayer structures to avoid the above mentioned problems, and without substantially sacrificing the excellent gas barrier properties of EVOH. The modified composition of this invention is a blend of EVOH with an amorphous polyamide, which retains both components as distinct, separate phases, both of which deform under conditions of thermoforming. Other objects of the present invention will become apparent.

BRIEF SUMMARY OF THE INVENTION

According to the present invention there is provided a blend of a major portion of ethylene vinyl alcohol copolymer (EVOH) and a minor portion of an amorphous polyamide. Further provided are containers prepared from multilayer structures incorporating a layer of this composition.

DETAILED DESCRIPTION OF THE INVENTION

Materials and structures with barrier properties are important in many applications. Of particular interest are packaging materials which are barriers to the penetration of gases, such as oxygen, carbon dioxide, and various aromas.

In many packaging applications EVOH resins are used as relatively thin components of multilayer structures or containers. Usually, the major parts of the structures are made of less expensive "structural" materials, bound to the EVOH layer by adhesive layers. The fabrication of the finished containers is frequently done by the thermoforming of a semifinished part, which comprises all of these layers. For the purposes of this invention, thermoforming processes include any process for forming a shaped article (e.g., a film or a container) which is performed in a process which (a) is distinct from the initial melt processing step and (b) which is performed at a temperature which is elevated above room temperature but lower than the melting point of the polymeric structural material. These thermoforming processes are performed on a semifinished shaped article (often called a "preform") which has been cast or molded from a molten polymer. Thus, for example, casting of a film would not be a thermoforming process according to this invention because it is a melt processing step; vacuum-forming the film to prepare a container would be a thermoforming process. Making a film by a blown tubular process may or may not be a thermoforming process, depending on the temperature of the tubing or bubble at the location where blowing occurs. Examples of thermoforming processes include thermoforming as the term is commonly used (but excluding melt phase thermoforming), vacuum-forming, solid phase pressure forming, co-injection blow molding, co-injection stretch blow molding, tube extrusion followed by stretching, scrapless forming, forging and tubular or flat sheet oriented film processes. Examples of articles that can be prepared using thermoforming processes are films and containers such as bottles, jars, cans, bowls, trays, dishes, and pouches.

The temperature of the thermoforming step is usually determined by the "forming temperature" of the structural material, that is, the temperature at which it can be thermoformed. The forming temperature of a polymer is not readily related to any material properties of the polymer, except that it is normally higher than the $T_g$ of the polymer. Many structural materials have a lower forming temperature than that of EVOH, and it may be desirable for many reasons to conduct a molding operation at as low a temperature as possible. Thus the temperatures used for the thermoforming of such multilayer structures are so relatively low that the EVOH layer has only limited formability, and the desired containers cannot be made without tearing or rupturing of the EVOH layer. The resulting discontinuities in the EVOH layer result in inferior oxygen barrier performance of the resulting container. An object of this invention is to provide a modified EVOH composition which may be used in thermoformed multilayer structures to avoid the above mentioned problems, and without substantially sacrificing the excellent gas barrier properties of EVOH. This modified composition is a blend of EVOH with an amorphous polyamide.

The ethylene vinyl alcohol resins used in this invention include resins having a copolymerized ethylene content of 20 to 60 mole %, especially 25 to 50 mole %. Copolymers of lower than about 15 to 20 mole % ethylene tend to be difficult to extrude while those above about 60 or 65 mole % ethylene have reduced oxygen barrier performance. These polymers will have a saponification degree of at least 90%, especially at least 95%. A degree of saponification of less than about 90% results in inferior oxygen barrier properties. The ethylene vinyl alcohol copolymer may include as a comonomer other olefins such as propylene, butene-1, pentene-1, or 4-methylpentene-1 in such an amount as to not change the inherent properties of the copolymer, that is, in an amount of up to about 5 mole % based on the total copolymer. The melting points of these ethylene vinyl alcohol polymers are generally between about 160° and 190°C.

Ethylene vinyl alcohol polymers are normally prepared by copolymerization of ethylene with vinyl acetate, followed by hydrolysis of the vinyl acetate component to give the vinyl alcohol group. This process is well known in the art.

The term "amorphous polyamide" is well known to those skilled in the art. "Amorphous polyamide," as used herein, refers to those polyamides which are lacking in crystallinity as shown by the lack of an endotherm crystalline melting peak in a Differential Scanning Calorimeter test (ASTM D-3417), 10°C/minute.

Examples of the amorphous polyamides that can be used include those amorphous polymers prepared from the following diamines: hexamethylenediamine, 2-methylpentamethylenediamine, 2,2,4-trimethylhexamethylenediamine, 2,4,4-trimethylhexamethylenediamine, bis(4-aminocyclohexyl)methane, 2,2-bis(4-aminocyclohexyl)isopropylidine, 1,4-diaminocyclohexane, 1,3-diaminocyclohexane, meta-xylylenediamine, 1,5-diaminopentane, 1,4-diaminobutane, 1,3-diaminopropane, 2-ethyldiaminobutane, 1,4-diaminomethylcyclohexane, p-xylylenediamine, m-phenylenediamine, p-phenylenediamine, and alkyl substituted m-phenylenediamine and p-phenylenediamine.

Examples of polyamides that can be used include those amorphous polymers prepared from the following dicarboxylic acids: isophthalic acid, terephthalic acid, alkyl substituted iso- and terephthalic acid, adipic acid, sebacic acid, butane dicarboxylic acid, and the like.

Polyamides prepared from aliphatic diamines with aliphatic diacids are the traditional semicrystalline nylons (also referred to as crystalline nylons) and are therefore not a part of this invention. Polyamides prepared from aromatic diamines and aromatic diacids are also known. However, certain of these all-aromatic polyamides are known to be intractable under ordinary melt processing conditions, and thus are not normally suitable. Thus the preferred amorphous polyamides are those in which either the diamine or the diacid moiety is aromatic, and the other moiety is aliphatic. The aliphatic groups of these polyamides preferably contain 4-8 carbon atoms in a chain or an aliphatic cyclic ring system having up to 15 carbon atoms. The aromatic groups of the polyamides preferably have mono or bicyclic aromatic rings which may contain aliphatic substituents of up to about 6 carbon atoms.

However, not all of these aromatic/aliphatic combinations will necessarily be suitable. For example, specifically metaxylylenediamine adipamide is not generally suitable for this invention. This polymer readily crystallizes under heating conditions typical for thermoforming operations, and also crystallizes upon orienting. This illustrates the fact that it is important to determine that a particular polyamide is amorphous, and not to rely solely on the chemical structure of the polymer. This determination can easily be done by DSC.

Specific examples of polyamides which are suitable for this invention include: hexamethylenediamine isophthalamide, hexamethylenediamine isophthalamide/terephthalamide terpolymer, having iso/tere ratios of 100/0 to 60/40 , mixtures of of 2,2,4- and 2,4,4-trimethylhexamethylenediamine terephthalamide, copolymers of hexamethylene diamine and 2-methylpentamethylenediame with iso- or terephthalic acids, or mixtures of these acids. Polyamides based on hexamethylenediamine iso/terephthalamide containing high levels of terephthalic acid may also be useful provided a second diamine such as 2-methyldiaminopentane is incorporated to produce a processible amorphous polymer.

The above amorphous polyamides may contain as comonomers minor amounts of lactam species such as caprolactam or lauryl lactam, even though polymers based on these monomers alone are not amorphous. The important feature is that the polyamide composition as a whole must be amorphous. Thus small amounts of these comonomers may be incorporated as long as they do not impart crystallinity to the polyamide.

Similarly, the amorphous polyamide component may itself be a blend of polyamides containing up to 30% of a miscible, semicrystalline aliphatic polyamide such as nylon 6, nylon 66, etc. Miscibility of the semicrystalline polyamide in the amorphous polyamide is attained when the ratio of number of nitrogen atoms to number of carbon atoms in the semicrystalline polyamide is greater than about 0.12. When miscible semicrystalline polyamides are present at these low levels, the polyamide phase does not exhibit crystallinity, as shown by differential scanning calorimetry ("DSC," ASTM D-3417). In addition, up to about 10 weight % of a liquid or solid plasticizer such as glycerol, sorbitol, or toluenesulfonamide ("Santicizer 8" from Monsanto) may be included with the amorphous polyamide.

For most applications the $T_g$ of the amorphous polyamide (as measured in the dry state, i.e., containing about 0.12 weight % moisture or less) should be in the range of 80° C to 160 °C., and preferably 80° C to 130° C. Amorphous polyamides, as described above, normally have $T_g$s of around 125° C when dry. The lower limit on $T_g$ is not clearly demarked; 80° C is an approximate lower limit. The upper limit on the $T_g$ is likewise not clearly demarked. But amorphous polyamides with $T_g$ above about 160° C are not readily thermoformable when used as a barrier layer. Thus all-aromatic polyamides, having aromatic groups in both acid and amine moieties, tend to have a $T_g$ which is too high to permit thermoforming, and are thus normally unsuitable for the purposes of this invention.

The amorphous polyamides of the present invention are prepared by condensation polymerization, which is well known to those skilled in the art.

The blends used in the present invention comprise 70 to 95 weight % EVOH, described above, and 30 to 5 weight % of amorphous polyamide component (including blends of amorphous polyamide with other polyamides or plasticizers, as described above). When less than about 5 weight % of the amorphous polyamide is used, the thermoformability of the blend is not significantly improved. When more than about 30% of the amorphous polyamide is used the oxygen barrier properties of the blend are degraded. Preferably the blends will contain 75 to 85 weight % EVOH and 25 to 15% weight percent amorphous polyamide component. Of course, small amounts of other material such as other polymers, processing aids, antioxidants, fillers, pigments, etc. may be included in the blend without destroying the essence of this invention.

The blends of the present invention may be prepared by blending techniques well known in the art, including the use of single or twin screw melt processors or extruders. Blending is performed at temperatures sufficiently high to form a uniform melt of the components to be blended, which is above the melting points of the two components. Typically blending is performed at melt temperatures of 200° to 225° C.

The blends of the present invention may be formed into a film, which may be done by typical equipment such as extrusion casting or blown film lines.

In addition, multiple layer structures which contain one or more layers of the blend of the present invention may be prepared. These structures may be incorporated into containers, which take advantage of the oxygen barrier properties of the blend of the present invention. In making multilayer containers, a structural layer will often be used, to provide structural support for the blend layer. The materials used for the structural layers may be made, for example, from any of a variety of structural polymers. Examples of such structural polymers include polypropylene (either homopolymers or copolymers with ethylene), polyethylene homopolymer or co- or terpolymers of ethylene with other monomers such as vinyl acetate, carboxylic acids, such as acrylic acid, or methacrylic acid (with or without neutralization to form ionomers), polyethylene terephthalate or its copolymers, and polymers based on vinyl chloride or styrene.

The various layers of such multiple layer structures may be held together by any of a variety of adhesive resins. In general, such adhesive resins are thermoplastic polymers having carbonyl groups derived from functional groups of free carboxylic acids, carboxylic acid salts, carboxylic acid esters, carboxylic acid amides, carboxylic anhydrides, carbonic acid esters, urethanes, ureas or the like. In these thermoplastic polymers, the carbonyl group concentration may be changed in a broad range, but in general, it is preferred to use a thermoplastic polymer containing carbonyl groups at a concentration of 10 to 1400 millimoles per 100 g of the polymer. Suitable adhesive resins include polyolefins modified with at least one ethylenically unsaturated monomer selected from unsaturated carboxylic acids and anhydrides, esters and amides thereof, especially polypropylene, high density polyethylene, low density polyethylene and ethylene-vinyl acetate copolymers modified with at least one member selected from acrylic acid, methacrylic acid, crotonic acid, fumaric acid, itaconic acid, maleic anhydride, itaconic anhydride, citraconic anhydride, ethyl acrylate, methyl methacrylate, ethyl maleate, 2-ethylhexyl acrylate, acrylamide, methacrylamide, fatty acid amides, and imides of the acids described above. The adhesive can also be prepared from an ethylene polymer and a second polymer grafted with maleic anhydride, as disclosed in U.S. Pat. 4,230,830. In addition, as the adhesive resin, there can be used ethylene-acrylate copolymers, ionomers, polyalkylene oxide-polyester block copolymers, carboxymethyl cellulose derivatives, and blends of these polymers with polyolefins.

It has been discovered that the blends of this invention can be used to make films and multiple layer structures which have excellent oxygen barrier properties. These structures, furthermore, can be thermoformed into shaped containers without occurrence of breaks or discontinuities in the EVOH blend layer, in contrast to the behavior of multilayer structures involving either EVOH by itself, or EVOH blended with crystalline polyamides. This behavior is illustrated in the following examples.

EXAMPLES

Example 1 and Comparative Examples C1-C3

Preparation of Blends

An EVOH polymer, containing 30 mole % ethylene and having a melt flow index of 3, as measured at 210° C with 2160 g weight (ASTM D-1238), was melt blended with one of a variety of polyamides, as indicated in Table I. For example 1, an amorphous polyamide was used, the condensation polymer of hexamethylenediamine (96.5 mole %), 4,4-bis(aminocyclohexyl)methane (3.5 mole %) and a 70/30 mixture of isophthalic and terephthalic acids. This polyamide is designated in Table I as "APA1." This polyamide was shown to be amorphous by the lack of any melting endotherm peak on DSC heating curves (ASTM D-3417). As a comparative example, (C1) EVOH was blended with nylon 6,12, or was evaluated without blending (C2 and C3). The weight ratios of the EVOH and the polyamides in each blend is indicated in Table I. Blending was accomplished on a twin-screw melt processor, 30 mm diameter, working at 50 rpm. The melt temperature was between 210° and 220° C. The polymer blend was extruded into a strand, cooled by air, and cut into pellets approximately 2 to 3 mm in diameter.

Physical Properties of Films

Films, 0.01 to 0.02 mm thick, were cast from the above blends, and for comparison, from unblended EVOH resins, as indicated in Table I. The oxygen permeabilities of these film samples were measured according to ASTM D-3985. The results show that the oxygen barrier properties of the blend of EVOH with the amorphous polyamide are comparable to those of unblended EVOH.

Preparation of Multilayer Structures

Next, samples of the blends used in the above examples, as well as the unblended EVOH resins, were coextruded into 1.5 mm multilayer sheet samples. Three single screw extruders, a combining adapter, and a 35 cm wide single manifold sheeting die were used. The two surface layers, polypropylene homopolymers with a melt flow index of 4 (ASTM D-1238 Condition L) and each 0.6 to 0.7 mm thick, were extruded on a 38 mm single screw extruder, L/D = 24, turning at 75 rpm, at a melt temperature of 233° C. Two adhesive layers, 0.02 to 0.04 mm thick, a blend of maleic anhydride grafted ethylene propylene copolymer in an ethylene vinyl acetate copolymer matrix, were extruded on a 32 mm single screw extruder, L/D = 24, turning at 6 rpm, at a melt temperature of 220° C. The sample core layers (blends or EVOH) 0.1 mm thick, were extruded on a 25 mm single screw extruder, L/D = 24, equipped with a grooved feed section, turning at 10 rpm, with a melt temperature of 215° C. The casting rolls were cooled with water having a temperature of 95° C. The casting speed was 0.6 m/min.

Thermoforming of Multilayer Structures

Subsequently, the cast multilayer sheets were thermoformed by solid state pressure forming on an Illig™ RDM-37/10 continuous roll fed thermoformer into cylindrical, can shaped containers, 67 mm diameter and 102 mm deep. The sheet samples were heated by ceramic heaters operating at 320° C to 380° C. The sheet samples attained the temperatures indicated in Table II. Forming was accomplished by using plug assist, air pressure of 480 kPa, and molding rates of 10 to 12 cycles/min.

The formed containers made with the EVOH as the barrier layer exhibited grooves on their side walls running parallel to the axis of the containers. Microscopic examination of the cross section of the container sidewalls cut perpendicular to the axis revealed numerous discontinuities of the EVOH core. It is believed that these discontinuities are the result of exceeding the formability limits of these EVOH resins during the thermoforming operation. Containers made with blends of EVOH with the aliphatic, crystalline nylons also had similar grooves. In contrast, the containers made using the blend of EVOH with the amorphous polyamide did not exhibit grooves.

To quantify these findings, counts were made of the core interruptions (grooves) and core neck-downs (which were thinning of the core layer without actual discontinuity) per 2.5 cm wall section. The results are given in Table II. The thermoformed structure prepared using the blend of the present invention was greatly superior to the comparative examples in terms of number of breaks or neckdowns. Such discontinuities in the barrier layer of the container will necessarily result in loss of barrier performance.

### Examples 2-6 and Comparative Examples C4-C9

### Preparation of Blends

For these blends, the same ethylene vinyl alcohol copolymer was used as in Example 1. This EVOH was blended with a condensation polymer of hexamethylenediamine with a 70/30 mixture of isophthalic and terephthalic acids, which is designated in Table III as "APA2." This polyamide was shown to be amorphous by the lack of any melting endotherm peak on DSC heating curves (ASTM D-3417). For comparative examples C4-C6, the EVOH was blended with nylon 6, nylon 666, or nylon 612, as indicated in Table III. For comparative examples C7-C9, EVOH was evaluated alone. For comparative example C10, the amorphous polyamide APA2 was evaluated alone. The weight ratios of the EVOH and the polyamide in each blend is indicated in Table III. Blending and extrusion were accomplished in the same manner as was used for Example 1, except that the blending speed was 150 rpm.

### Physical Properties of Films

Films, 0.01 to 0.05 mm thick, were cast from the above blends, and for comparison, from unblended EVOH resins, as indicated in Table III. The films were cast on a coextrusion casting line, with polypropylene layers approximately 0.25 mm thickness on each side of the sample film extruded simultaneously. These polypropylene layers were separated and discarded before testing of the film samples. The purpose of this procedure was to simulate a thin core barrier layer produced during coextrusion. The oxygen permeabilities of these film samples were measured as for Example 1, and are presented in Table III. It may be seen than the oxygen permeabilities of films prepared from blends of amorphous polyamides and EVOH are significantly better than those of the corresponding blends of EVOH and nylon 6 or nylon 666 copolymer.

The pin hole flex lives (ASTM F-456) of the films of these examples and comparative examples were measured, and are reported in Table III. Pin hole flex life is an important measure of film toughness, since the formation of pin holes in a barrier film due to flexing results in degradation of barrier properties. Surprisingly, the pin hole flex lives of the films prepared from EVOH and APA2 blends are better than those of any of the comparative examples prepared from the unmixed blend components (C7 - C10).

### Preparation and Thermoforming of Multilayer Structures

Multilayer sheet samples were prepared using the materials of Examples 2-6 and Comparative Examples C4-C7 and C9, using the same procedure as was used with Example 1, except that the cooling water used was 70°C. Subsequently these multilayer samples were thermoformed using the same conditions as for Example 1, and were analyzed for discontinuities in the walls in the same manner as in the earlier examples. The results are shown in Table IV. It is clear that the containers made from the blends of the present invention are superior to those made using either EVOH alone as a core material, or to those made using blends of EVOH with crystalline nylon as the core material.

While not wishing to be bound by any particular theory, it is believed that this improvement can be understood by considering the microscopic structure of these blends. Blends of amorphous polyamides with EVOH form two-phase systems, as indicated by electron microscopy. Electron microscopic examination of the core layer of the structure using the blend of example 4 showed a distinctly two-phase structure, with particle size of the APA inclusions in the 0.4 to 2 micrometer range. After the thermoforming step, electron microscopy showed that the inclusions had deformed into thin lamellae, which are believed to reinforce the EVOH matrix. In contrast, electron microscopy of the core layer of the structure using the blend of comparative example C6 before thermoforming showed a similar two-phase structure. But after thermoforming the polyamide inclusions did not show significant deformation. Thus it appears that the amorphous polyamides included in the matrix can flow at temperatures lower than those which would be required for deformation of crystalline polyamides. Yet another behavior was observed upon microscopic examination of the core layer of comparative example C4. This blend of EVOH with nylon 6 was compatible, and formed essentially a single phase structure, with no significant visible domains of polyamide either before or after thermoforming. It is believed that this single phase structure caused the poorer forming performance and higher oxygen permeability, perhaps because of a change in the crystal structure of the EVOH.

TABLE I

| EXAMPLE | POLYAMIDE | (%) | THICKNESS (mm) | OPV[1] |
|---------|-----------|-----|----------------|--------|
| 1 | APA1 | 10 | 0.011 | 2.3 |
| C1 | nylon 612 | 10 | 0.018 | 5.4 |
| C2 | none | 0 | 0.018 | 3.1 |
| C3 | none | 0 | 0.021 | 2.3 |

1. ml-micrometer/$m^2$-day-atm at 30°C, 0% relative humidity

TABLE II

| THERMOFORMED COEXTRUDED SHEET | | | | |
|---------|---------|--------|-------------|----------------|
| EXAMPLE | TEMP(°C) | DRAW X | BREAKS/25mm | NECKDOWNS/25mm |
| 1 | 163 | 6.9 | 0 | 6 |
| C1 | 163 | 6.7 | 6 | 34 |
| C2 | 162 | 6.5 | 8 | 34 |
| C3 | 164 | 6.9 | 25 | 11 |

TABLE III[1]

| EXAMPLE | POLYAMIDE | (%) | THICKNESS (mm) | OPV[2] | PINHOLE FLEX[3] |
|---|---|---|---|---|---|
| 2 | APA2 | 10 | 0.048 | 3.9 | 1500 |
| 3 | APA2 | 20 | 0.040 | 3.1 | 1410 |
| 4 | APA2 | 20 | 0.015 | 4.7 | 1759 |
| 5 | APA2 | 30 | 0.017 | 5.0 | 1585 |
| 6 | APA2[4] | 20 | 0.012 | 2.3 | 1750 |
| C4 | nylon 6 | 20 | 0.014 | 19.4 | 2855 |
| C5 | nylon 666 | 20 | 0.026 | 17.4 | 2698 |
| C6 | nylon 612 | 20 | 0.018 | 1.2 | 1998 |
| C7 | none | 0 | 0.045 | 4.7 | 892 |
| C8 | none | 0 | 0.023 | 3.1 | 1270 |
| C9 | none | 0 | 0.020 | 1.9 | 1150 |
| C10 | APA2 | 100 | 0.018 | - | 1092 |

1. A dash (-) indicates that the measurement was not made.
2. OPV defined as in Table I.
3. cycles to failure
4. containing 10% glycerol

TABLE IV

| THERMOFORMED COEXTRUDED SHEET | | | | |
|---|---|---|---|---|
| EXAMPLE | TEMP(°C) | DRAW X | BREAKS/25mm | NECKDOWNS/25mm |
| 2 | 159 | 7.0 | 1 | 18 |
| 3 | 159 | 7.1 | 1 | 7 |
| 4 | 161 | 7.1 | 0 | 0 |
| 5 | 159 | 6.4 | 0 | 0 |
| 6 | 159 | 6.8 | 0 | 1 |
| C4 | 159 | 7.4 | 9 | 37 |
| C5 | 157 | 6.3 | 9 | 45 |
| C6 | 159 | 7.2 | 17 | 38 |
| C7 | 156 | 8.2 | 12 | 31 |
| C9 | 160 | 6.2 | 34 | 7 |

**Claims**

1. A container prepared by thermoforming a multiple layer structure wherein at least one of the layers is prepared from a blend consisting essentially of 70 to 95 percent by weight of an ethylene vinyl alcohol copolymer having a copolymerized ethylene content of 20 to 60 mole percent and a degree of saponification of at least 90%, and 5 to 30 percent by weight of an amorphous polyamide.

2. The container of claim 1 wherein the amorphous polyamide has a glass transition temperature of 80° to 160°C.

3. The container of claim 2 wherein the amorphous polyamide has a glass transition temperature of 80° to 130°C.

4. The container of claim 1, 2, or 3 wherein the ethylene vinyl alcohol copolymer is present at 75 to 85 percent by weight and the amorphous polyamide is present at 15 to 25 percent by weight.

5. The container of any one of claims 1 to 4 wherein the ethylene vinyl alcohol copolymer contains 25 to 50 mole percent copolymerized ethylene.

6. The container of any one of claims 1 to 5 wherein the ethylene vinyl alcohol copolymer has a degree of saponification of at least 95 percent.

7. The container of any one of claims 1 to 6 wherein the amorphous polyamide is selected from the group consisting of hexamethylenediamine isophthalamide, hexamethylenediamine isophthalamide/terephthalamide terpolymer, having iso/tere ratios of 100/0 to 60/40, mixtures of 2,2,4- and 2,4,4-trimethylhexamethylenediamine terephthalamide, copolymers of hexamethylenediamine and 2-methylpentylenediamine with iso-or terephthalic acids, or mixtures of these acids.

8. The container of claim 7 wherein the amorphous polyamide is hexamethylenediamine isophthalamide/terephthalamide terpolymer, having an iso/tere ratio of about 70/30.

9. The container of any one of claims 1 to 8 wherein at least one of the layers is a structural polymer.

10. The container of claim 9 wherein the structural polymer is selected from the group consisting of polypropylene, copolymers of propylene with ethylene, polyethylene, polyethylene copolymers, copolymers of ethylene with vinyl acetate, copolymers of ethylene with carboxylic acids wherein the carboxylic acid is unneutralized or is neutralized to form an ionomer, polyethylene terephthalate, polymers based on vinyl chloride, polymers based on styrene, and blends of such polymers.

11. The container of claim 9 or 10 which also contains at least one layer of adhesive.

12. A blend consisting essentially of 70 to 95 percent by weight of ethylene vinyl alcohol copolymer having a copolymerized ethylene content of 20 to 60 mole percent and a degree of saponification of at least 90%, and 5 to 30 percent by weight of a polyamide component comprising a blend of at least 70 percent by weight amorphous polyamide and up to 30 percent by weight of a semicrystalline aliphatic polyamide miscible therewith.

**Patentansprüche**

1. Durch Thermoformen einer vielschichtigen Struktur hergestellter Behälter, worin wenigstens eine der Schichten aus einer Mischung hergestellt ist, die im wesentlichen aus 70 bis 95 Gew.-% eines Ethylen/Vinylalkohol-Copolymers mit einem copolymerisierten Ethylengehalt von 20 bis 60 Mol-% und einem Verseifungsgrad von wenigstens 90 % sowie 5 bis 30 Gew.-% eines amorphen Polyamids besteht.

2. Behälter nach Anspruch 1, worin das amorphe Polyamid eine Glasübergangstemperatur von 80° bis 160° C hat.

3. Behälter nach Anspruch 2, worin das amorphe Polyamid eine Glasübergangstemperatur von 80° bis 130° C hat.

4. Behälter nach Anspruch 1, 2 oder 3, worin das Ethylen/Vinylalkohol-Copolymer mit 75 bis 85 Gew.-% und das amorphe Polyamid mit 15 bis 25 Gew.-% zugegen ist.

5. Behälter nach einem der Ansprüche 1 bis 4, worin das Ethylen/Vinylalkohol-Copolymer 25 bis 50 Mol-% copolymerisiertes Ethylen enthält.

6. Behälter nach einem der Ansprüche 1 bis 5, worin das Ethylen/Vinylalkohol-Copolymer einen Verseifungsgrad von wenigstens 95 % hat.

7. Behälter nach einem der Ansprüche 1 bis 6, worin das amorphe Polyamid aus der aus Hexamethylendiaminisophthalamid, Hexamethylendiaminisophthalamid/Terephthalamid-Terpolymer mit Iso/Tere-Verhältnissen von 100/0 bis 60/40, Mischungen von 2,2,4- und 2,4,4- Trimethylhexamethylendiamintherephthalamid, Copolymeren von Hexamethylendiamin und 2 Methylpentylendiamin mit Iso- oder Terephthalsäure sowie Mischungen dieser Säuren bestehenden Gruppe ausgewählt ist.

**8.** Behälter nach Anspruch 7, worin das amorphe Polyamid Hexamethylendiamindisophthalamid/Terephthalamid-Terpolymer mit einem Iso/Tere-Verhältnis von etwa 70/30 ist.

**9.** Behälter nach einem der Ansprüche 1 bis 8, worin wenigstens eine der Schichten ein strukturelles Polymer ist.

**10.** Behälter nach Anspruch 9, worin das strukturelle Polymer aus der aus Polypropylen, Copolymeren von Propylen mit Ethylen, Polyethylen, Polyethylencopolymeren, Copolymeren von Ethylen mit Vinylacetat, Copolymeren von Ethylen mit Carbonsäuren, worin die Carbonsäure nicht neutralisiert ist oder unter Bildung eines Ionomers neutralisiert ist, Polyethylenterephthalat, auf Vinylchlorid basierenden Polymeren, auf Styrol basierenden Polymeren und Mischungen solcher Polymere bestehenden Gruppe ausgewählt ist.

**11.** Behälter nach Anspruch 9 oder 10, welcher weiterhin wenigstens eine Klebstoffschicht enthält.

**12.** Mischung, die im wesentlichen aus 70 bis 95 Gew.-% Ethylen/Vinylalkohol-Copolymer mit einem copolymerisierten Ethylengehalt von 20 bis 60 Mol-% und einem Verseifungsgrad von wenigstens 90 % sowie 5 bis 30 Gew.-% einer Polyamidkomponente besteht, die eine Mischung aus wenigstens 70 Gew.-% amorphem Polyamid und bis zu 30 Gew.-% eines damit mischbaren halbkristallinen aliphatischen Polyamids umfaßt.

**Revendications**

**1.** Un récipient fabriqué par thermoformage d'une structure multicouche dans laquelle l'une au moins des couches est préparée à partir d'un mélange constitué essentiellement de 70 à 95 pour cent en poids d'un copolymère éthylène-alcool vinylique ayant une teneur en éthylène copolymérisé de 20 à 60 moles pour cent et un degré de saponification d'au moins 90 %, et de 5 à 30 pour cent en poids d'un polyamide amorphe.

**2.** Le récipient de la revendication 1, dans lequel le polyamide amorphe a une température de transition vitreuse de 80° à 160°C.

**3.** Le récipient de la revendication 2, dans lequel le polyamide amorphe a une température de transition vitreuse de 80° à 130°C.

**4.** Le récipient de la revendication 1, 2 ou 3, dans lequel le copolymère éthylène-alcool vinylique est présent en une proportion de 75 à 85 pour cent en poids et le polyamide amorphe est présent en une proportion de 15 à 25 pour cent en poids.

**5.** Le récipient de l'une quelconque des revendications 1 à 4, dans lequel le copolymère éthylènealcool vinylique contient 25 à 50 moles pour cent d'éthylène copolymérisé.

**6.** Le récipient de l'une quelconque des revendications 1 à 5, dans lequel le copolymère éthylènealcool vinylique a un degré de saponification d'au moins 95 pour cent.

**7.** Le récipient de l'une quelconque des revendications 1 à 6, dans lequel le polyamide amorphe est choisi dans le groupe formé par l'isophtalamide d'hexaméthylènediamine, un terpolymère isophtalamide/téréphtalamide d'hexaméthylènediamine ayant des rapports iso/téré de 100/0 à 60/40, des mélanges de téréphtalamides de 2,2,4- et 2,4,4-triméthylhexaméthylènediamines, des copolymères d'hexaméthylènediamine et de 2-méthylpentylènediamine avec l'acide iso- ou téréphtalique ou des mélanges de ces acides.

**8.** Le récipient de la revendication 7, dans lequel le polyamide amorphe est un terpolymère isophtalamide/téréphtalamide d'hexaméthylènediamine ayant un rapport iso/téré d'environ 70/30.

**9.** Le récipient de l'une quelconque des revendications 1 à 8, dans lequel au moins l'une des couches consiste en un polymère structural.

**10.** Le récipient de la revendication 9, dans lequel le polymère structural est choisi dans le groupe formé par le polypropylène, les copolymères de propylène et d'éthylène, le polyéthylène, les copolymères de polyéthylène, les copolymères d'éthylène et d'acétate de vinyle, les copolymères d'éthylène et d'acides carboxyliques dans lesquels l'acide carboxylique n'est pas neutralisé ou est neutralisé pour former un ionomère, le polytéréphtalate d'éthylène, les polymères à base de chlorure de vinyle, les polymères à base de styrène, et les mélanges de ces polymères.

**11.** Le récipient de la revendication 9 ou 10, qui contient également au moins une couche d'adhésif.

**12.** Un mélange constitué essentiellement de 70 à 95 pour cent en poids d'un copolymère éthylène-alcool vinylique ayant une teneur en éthylène copolymérisé de 20 à 60 moles pour cent et un degré de saponification d'au moins 90 %, et de 5 à 30 pour cent en poids d'un composant polyamide comprenant un mélange d'au moins 70 pour cent en poids de polyamide amorphe et jusqu'à 30 pour cent en poids d'un polyamide aliphatique semi-cristallin miscible à celui-ci.